# EUROPEAN PATENT APPLICATION

(11) **EP 0 856 933 A1**
(43) Date of publication of application: **05.08.1998**
(21) Application number: 97933699.7
(22) Date of filing: 31.07.1997
(51) Int. Cl.: H02K 15/02

(54) **VERTICAL DIRECT OVERINJECTION SYSTEM**

(30) Priority: 02.08.1996 ES 9601738
(71) Applicant: EDT Ripoll a SF Foundation tambien conocida por Escola del Treball del Ripolles, Fundacio S.F., 17500 Ripoll (ES)
(72) Inventor: SOLER FONT, Eduardo, E-08006 Barcelona (ES)
(74) Representative: Curell Sunol, Jorge
(86) International application number: ES9700198
(87) International publication number: WO9806164

(57) **Abstract**

The system comprises a mold (2) having a cylindrical cavity (3) provided with a bottom and intended to adjustably and displacably house a bundle or packet (4) of magnetic plates of a rotor; means (13) intended to pout into the cavity (3) a volume of molten metal which is equal to the volume necessary for forming the lower body (9, 10), the upper ring (10) and the rotor bars; and means (5) intended to actuate on the packet (4), in order to introduce the latter into the cylindrical cavity (3) of the mold (2) and to displace the packet towards the bottom, thereby exerting a pressing effect to the molten metal mass deposited on the bottom; the ascending displacement of a portion of the mass of metal through aligned orifices of the packet (4) of plates is determined.

## Description

The present invention relates to a vertical direct overinjection system, for producing a squirrel cage rotor formed by a magnetic plate bundle which: [i] is provided with a series of aligned orifices, an upper ring, a lower body and bars of conducting material filling said orifices and extending between said upper ring and said lower body, forming an integral unit; and [b] is provided with an axial cavity.

As is well known, the rotors of this type comprise a magnetic plate bundle which is crossed through by a series of conductor bars, normally positioned obliquely and extending from an upper ring to another lower ring. These rings may be formed with a number of heat diffusing fins (in the case of a traditional type motor, with internal rotor and external stator) or one of them may form the cupola or base (in the case of a motor of the so-called "ring" type, in which the rotor is external, enveloping the stator.

In the present state of the art, it is well known to manufacture the above rotors by injecting a molten metal mass, normally aluminum, over the magnet plate bundle previously positioned in an appropriate mold. The pressure injected aluminum mass forms the two said rings or, possibly, a cupola or lower body and a ring, and fills the series of obliquely aligned orifices contemplated in the plates forming the bundle, to form the bars. In spite of its widespread use, this art has a number of serious drawbacks, the most important of which are to be found in the slowness of the process, although molds are used which allow the simultaneous injection of more than one unit, in view of the series of operations which must of necessity be carried out (mounting of the plate bundle in the mold, injection and mold stripping), in a notable loss of injection material in the finishing operations to which the molded parts must be subjected, etc., etc.

The invention is directed to overcoming the above mentioned drawbacks, specially by allowing the manufacturing process of squirrel cage rotors to be practically fully automated, while reducing the material losses practically to nothing, very notably increasing the manufacturing rate and eliminating or reducing to a minimum the finishing operations to which the molded rotors must be subjected.

The objectives mentioned in the foregoing paragraph are attained with a system of the type first mentioned above which is characterized in that it comprises: a mold formed with a vertically extending cylindrical cavity and having a bottom, said cylindrical cavity being for snugly vertically movably housing said magnetic plate bundle; first means for pouring onto the bottom of said cylindrical cavity a volume of molten metal exactly required for forming said lower body, upper ring and bars; and second means for acting on said magnetic plate bundle, inserting it in said cylindrical cavity of said mold and displacing it towards said bottom, in order to exert a pressing effect on said molten metal mass deposited on said bottom, causing the upward displacement of a part of said mass through said series of aligned orifices.

It is essential to use the magnetic plate bundle as a plunger in the injected molding operation of the molten metal mass which is to form the bars and ring of the squirrel cage rotor. To this end, in accordance with the invention, there is contemplated essentially a mold formed with a cylindrical cavity, closed at the bottom end or having closing means thereat, in which, at the start of each molding cycle, an exact metered amount of the molten metal to be overinjected must be poured. The magnetic plate bundle on which the injection is to be formed fits exactly, like a plunger, in the said cylindrical cavity and is forced towards the bottom thereof by a hydraulic cylinder (corresponding to the same mechanism which in the conventional injection molding machines determines the movement of the plunger which, through the corresponding gate or gates, injects the molten metal in the mold cavity under pressure). In this movement, the plate bundle causes a displacement of part of the molten metal in the bottom of the mold towards the top thereof, through the series of aligned orifices provided in said plates, filling these series of orifices, which correspond to the squirrel cage bars and passing to form the upper ring of said cage. After the metal has set, the unit may be stripped from the mold and may be integrated directly in the corresponding motor, practically without any finishing operation being necessary.

It will be understood that the system according to the invention will allow the production rate of the machine to be notably increased, will allow the elimination (simply by correctly metering the amount of molten metal poured into the mold in each operation) of the metal losses (precisely the metal filling the injection gates) which must be recycled with a very large added cost and a significant loss of quality and will also allow the investment in molds to be notably reduced, particularly because one sale cylindrical mold may be used for the manufacture of rotors in which the thickness of the plate bundle varies between relative broad extremes and because on avoiding the violent collision of the pressure injected metal against the mold walls, one of the main causes reducing the working life of the currently used molds will be eliminated.

Further features and advantages of the invention will evident from the description given hereafter with reference to the accompanying drawings of preferred embodiments of the invention.

In the drawings:

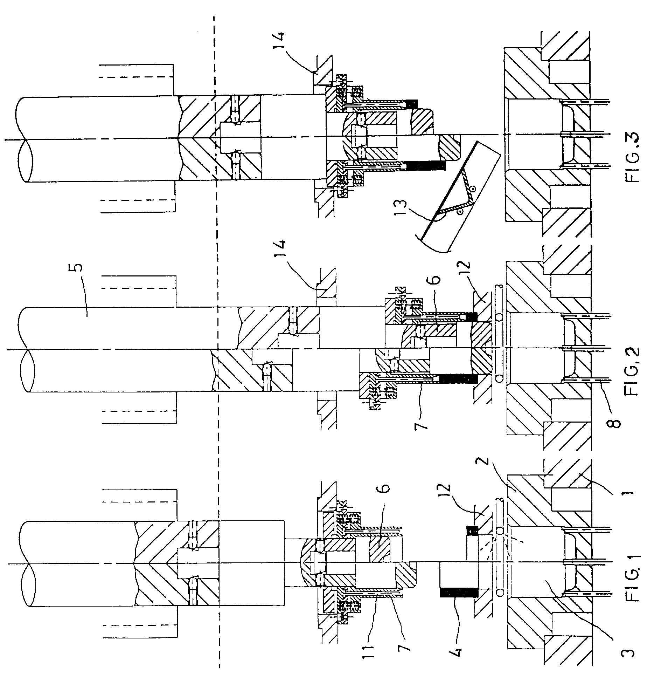

Figures 1 to 7 are schematic cross section views showing successive steps of a cycle performed in accordance with the invention and precisely for producing a squirrel cage rotor for an electric motor of the so-called ring type (used almost exclusively for fan motors) which comprises an internal stator and an external rotor surrounding it. These drawings have been used also to show the versatility of the system, in the sense of making possible the use of one same mold and one same mechanism for manufacturing rotors of very different axial dimensions, i.e. of rotors having the same diameter, but in which the magnetic plate bundle is formed by a very different number of plates. Thus, in all the figures, the left-hand side corresponds to the manufacture of a rotor having a maximum axial dimension, while the right-hand side corresponds to the manufacture of a rotor having a minimum axial dimension.

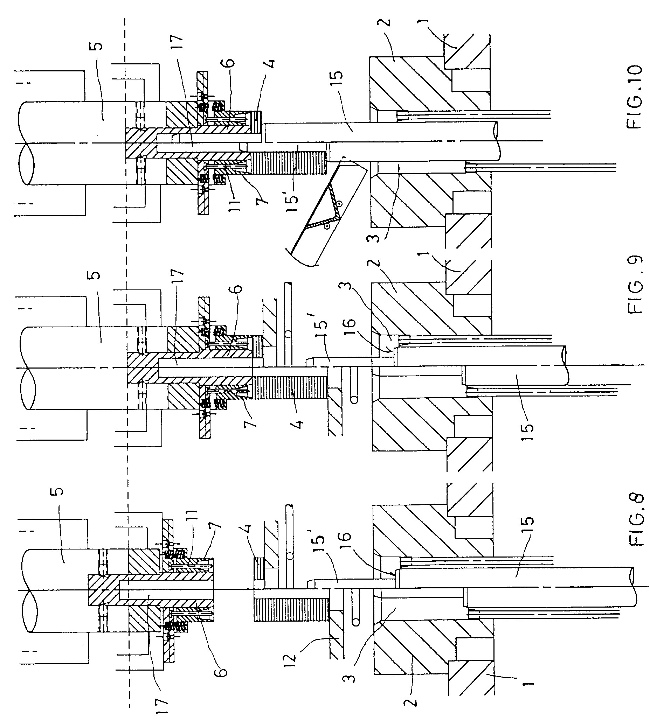

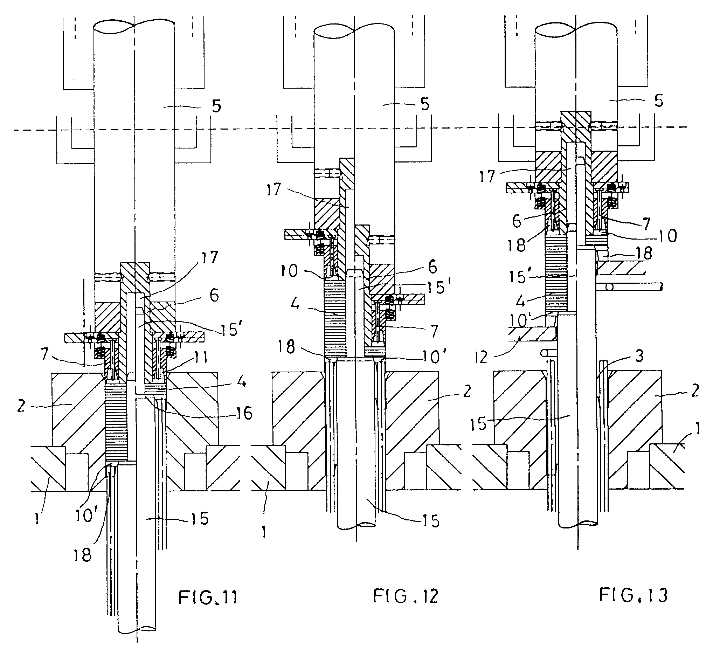

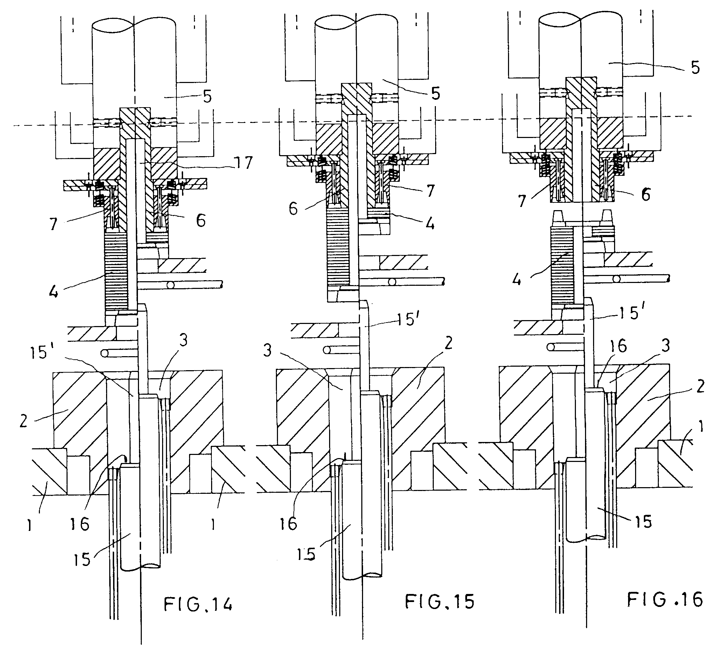

Figures 8 to 16 are schematic cross section views, similar to those shown in the foregoing figures, but relating to the manufacture of a squirrel cage rotor for electric motors of the type having an internal rotor and an external stator surrounding it. As may be gathered from these figures, one same basic machine or plant may be used for the manufacture of these two types of rotor. In these figures, also, the manufacture of a rotor having maximum and minimum axial dimensions has been shown at the left-hand and the right-hand side, respectively.

Reference is made hereinafter to Figures 1 to 7:

According to the invention, the pressurized overinjection system is carried out in a machine having a table 1, to which there is attached a mold 2 having a cylindrical cavity 3 in which there fits, in plunger style, the magnetic plate bundle 4 and a vertical column 5, preferably hydraulically operated, at the end of which there is attached a countermold 6, 7.

When manufacturing a rotor for ring motors, the cylindrical cavity 3 of the mold 2 is closed at the bottom, having therein only an appropriate set of ejectors 8; the cavity 3 is provided with a shape appropriate for forming the outer surface of the lower body 9, forming one of the ends of the rotor. In turn the countermold is preferably formed by two independent coaxial parts, having an inner part 6 exactly fitting in an axial cavity of the magnetic plate bundle 4 and which, at the end thereof, has a shape defining the counterfigure of the inner body 9 or, in other words, its shape, and together with the bottom of the cylindrical cavity 3, defines a space for molding the lower body 9. The outer part 7 envelops the inner part 6 and forms a second space for molding the upper ring 10 which forms the other end of the rotor. This part 7 is also provided with an appropriate set of ejectors 11.

In the embodiment shown in the drawings there has been contemplated a preferred automatic device consisting basically of a horizontal platform 12 capable of rotation and horizontal movement, by which the successive magnetic plate bundles 4 are offered up and the already manufactured rotors are discharged. This automatic device allows very high production rates to be attained, above all when working with machines having two injection heads capable of alternate or simultaneous operation.

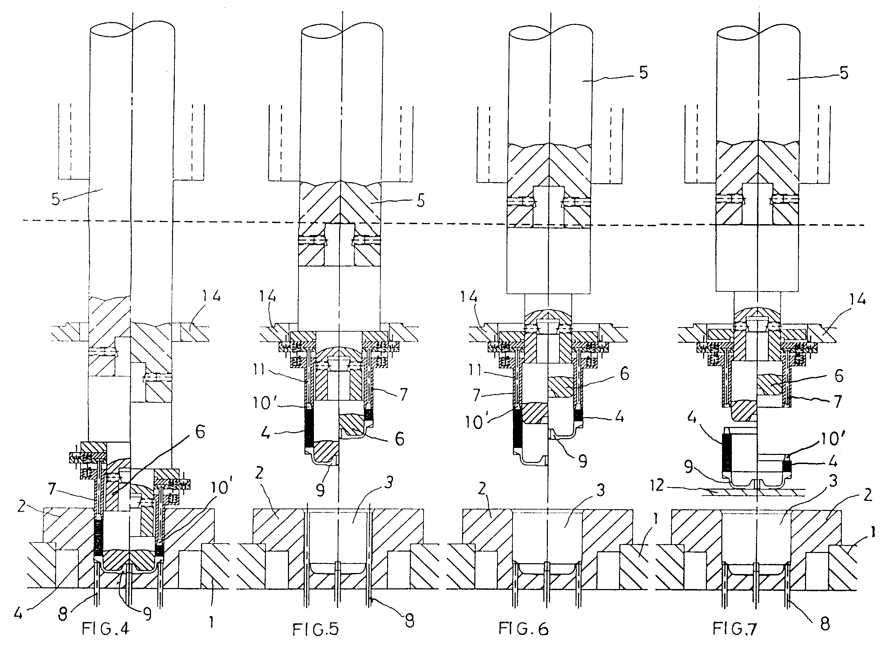

In an initial step of the overmolding process (Figure 1), the platform 12 places the magnetic plate bundle 4 before the cylindrical cavity 3 of the mold 2, which is exactly coaxial with the vertical column 5, to which the countermold 6, 7, also coaxial with this unit, is attached. Then (Figure 2), the column 5 is lowered whereby the inner part of the countermold 6 penetrates in the axial cavity of the magnetic plate bundle 4 - in which it fits exactly - and extends beyond it, protruding outwardly from the opposite end of the axial cavity, while the outer part of the countermold 7 presses against the top end of the bundle 4. Thereafter (Figure 3), the vertical column 5 is raised and, therefore, the magnetic plate bundle 4, which is attached by simple fitting on the inner part of the countermold 6. The platform 12 is withdrawn in this same step and the active position is occupied by first means 13, by which the exact amount of molten metal (preferably aluminum) to be molded is poured into the cylindrical cavity 3 of the mold 2. In the following step (Figure 4), the overmolding process itself occurs. In this step, in fact, the vertical column 5 is lowered, whereby the magnetic plate bundle 4 is driven inside the cylindrical cavity 3, in which it fits exactly, in plunger style, causing, in cooperation with the outer part of the countermold 7, the displacement of the metal in the bottom of the mold 2 through the series of aligned orifices provided in the plates forming the bundle 4 (corresponding to the squirrel cage bars) towards the top, where it fills the second space provided in the outer part of the countermold 7, defining the upper ring 10 of the cage. In step 5, after the metal forming the lower body 9, the upper ring 10 and the bars (not visible in the drawings) has set, the column 5 is raised, whereby, in cooperation with the ejectors 8, the finished rotor is removed from the cylindrical cavity 3 of the mold 2. In step 6, the column 5 continues to be raised, by operation a fixed stop ring 14, an axial movement of the inner countermold 6 relative to the outer countermold 7, whereby, in a word the complete release of the manufactured rotor is achieved with the aid of the ejectors 11. As may be seen in Figure 7, the rotor is finally picked up by the mobile horizontal platform 12 and discharged, the unit being in disposition to start a new operative cycle.

It is understood that one with ordinary skill in the art will not have excessive difficulties in designing an automatic device duly synchronizing the movements of the column 5, platform 12, first pouring means 13 and the devices (not shown) exactly metering the amount of molten metal poured in each operation in the cylindrical cavity 3 of the mold 2 and accurately controlling the temperature of this metal. The process may, consequently, be fully automated, with a view to attaining very high production rates.

As already said above, Figures 8 to 16 show the successive steps of a basically identical manufacturing cycle, but directed to producing a squirrel cage rotor for a conventional type electric motor, i.e., having an internal rotor and an external stator. The cycle is developed basically in the same way to the one already analyzed, there being only certain differences in the tooling used. In this case, in the first place, the bottom of the cylindrical cavity 3 of the mold 2 is not closed, but is axially penetrated by an axially moveable vertical bar 15 preferably moved by hydraulic means. From a horizontal shoulder 16, the vertical bar 15 has a smaller section end portion 15'. In the second place, the countermold 6, 7 is also formed by two coaxial parts, but the inner portion 6 of the mold, instead of penetrating in the axial cavity of the magnetic plate bundle 4, is provided with an axial hollow 17, in which the end portion 15' of the vertical bar 15 may fit.

In the initial step of the manufacturing process, the platform 12 or, possibly, other equivalent member replacing it, places the magnetic plate bundle 4 between the mold 2 and the countermold 6, 7, locating it accurately in a position coaxial with these members (Figure 8). In the following step (Figure 9) the vertical column 5 is lowered, such that the bundle 4 is trapped and blocked between the platform 12 and the countermold 6, 7. Thereafter (Figure 10) the platform is withdrawn, the vertical bar 15 is raised such that the end portion 15' thereof penetrates in the axial cavity of the magnetic plate bundle 4, in which it fits exactly, while the free end of the end portion 15' penetrates and fits snugly in the axial hollow 17 of the countermold 6, the base of the bundle bearing on the shoulder 16 and the first pouring means 13 becomes active, as previously studied. Thereafter (Figure 11), the essential step of the process occurs in which the column 5 and the vertical bar 15 are lowered, the magnetic plate bundle 4 penetrates in the cylindrical cavity 3 of the mold, after the fashion of a plunger, and the molten metal flows through the series of aligned orifices provided in the plates forming the bundle 4, as has been previously studied. After the overmolded metal has set, the already finished rotor, formed by the magnetic plate bundle 4, the bars crossing through it and the upper and lower rings 10 and 10', possibly provided with ventilation fins 18, is held trapped between the countermold and the bar 15 and follows these members in their upward movement, and is stripped from the mold as shown in Figure 12. In the following steps, the platform 12 is advanced and the rotor bears against it (Figure 13). the bar 15 is lowered, withdrawing the end portion 15' thereof from the axial cavity of the rotor, releasing it; the column 5 is raised (Figure 15); and, finally, the ejectors 11 are operated to separate the rotor from the countermold, leaving it on the platform 12 (Figure 16), ready to be moved away, with a view to starting a new operative cycle.

In this case also, the same as happens in the manufacture of rotors for ring motors, the process may be fully or partially automated, with relative ease, by using a combination of known means which are within the scope of the person of ordinary skill in the art.

## Claims

1. A vertical direct overinjection system, for producing a squirrel cage rotor formed by a magnetic plate bundle (4) which: [i] is provided with a succession of aligned orifices, an upper ring (10), a lower body (9, 10') and bars of conducting material filling said orifices and extending between said upper ring (10) and said lower body (9, 10'), forming an integral unit; and [b] is provided with an axial cavity, characterized in that it comprises: a mold (2) formed with a vertically extending cylindrical cavity (3) and having a bottom, said cylindrical cavity (3) being for snugly vertically movably housing said magnetic plate bundle (4); first means (13) for pouring onto the bottom of said cylindrical cavity (3) a volume of molten metal exactly required for forming said lower body (9, 10'), upper ring (10) and bars; and second means (5) for acting on said magnetic plate bundle (4), inserting it in said cylindrical cavity (3) of said mold (2) and displacing it towards said bottom, in order to exert a pressing effect on said molten metal mass deposited on said bottom, causing the upward displacement of a part of said mass through said series of aligned orifices.

2. The system of claim 1, characterized in that said bottom of said cylindrical cavity (3) of said mold (2) is closed and has a shape adapted to form the outer surface of said lower body (9); and in that said second means comprises a vertical column (5) to which there is attached at the bottom thereof a countermold (6, 7) formed by: [a] a inner part (6), which: [i] is for fitting inside said axial cavity of said magnetic plate bundle (4); [ii] for extending beyond said axial cavity; and [iii] has a shape which, in combination with said bottom of said cylindrical cavity (3), is for defining a first space for molding said lower body (9); and [b] an outer part (7), for bearing at the top against said magnetic plate bundle (4), defining a second space for molding said upper ring (10).

3. The system of claim 1, characterized in that said bottom of said cylindrical cavity (3) of said mold (2): [a] has a peripheral annular region defining a space for molding at least said lower body (10'); and [b] is adapted to be snugly crossed through by a vertical bar (15), which: [i] is vertically movable; [ii] has a horizontal shoulder (16) for forming a support for said magnetic plate bundle (4); and [iii] has a smaller section end portion (15'), extending from said horizontal shoulder (16) and adapted to pass snugly through said magnetic plate bundle (4); and in that said second means for acting on said magnetic plate bundle (4) comprises a vertical column (5) to which there is attached at the bottom thereof a countermold (6, 7) formed by: [a] a inner part (6), having an axial hollow (17) for snugly housing said end portion (15'); and [b] an outer part (7) for bearing at the top against said magnetic plate bundle (4) and defining a second space for molding said upper ring (10).
